# EUROPÄISCHE PATENTSCHRIFT

(11) **EP 0 836 043 B1**
(45) Veröffentlichungstag und Bekanntmachung des Hinweises auf die Patenterteilung: **14.03.2001**
(21) Anmeldenummer: 97117636.7
(22) Anmeldetag: 11.10.1997
(51) Int. Cl.: F16L 37/12

(54) **Verbindungselement zum Verbinden von Schlauch- und Rohrleitungsabschnitten**
Connection element for joining hose and pipe sections
Element de connexion pour la connexion de tuyaux et tuyaux flexibles

(30) Priorität: 14.10.1996 DE 19642338
(43) Veröffentlichungstag der Anmeldung: 15.04.1998
(73) Patentinhaber: Prange, Karl-Heinz, 45649 Sprockhövel (DE)
(72) Erfinder: Prange, Karl-Heinz, D-45549 Sprockhövel (DE); Nickel, Klaus, D-45527 Hattingen (DE); Gleissner, Wolfgang, D-45259 Essen (DE)
(74) Vertreter: Hallermann, Dietrich-Otto, Dipl.-Ing. Patentassessor

(56) Entgegenhaltungen:
- EP-A- 0 385 052
- GB-A- 2 066 916
- US-A- 3 930 674

## Beschreibung

Die Erfindung betrifft ein Verbindungselement zum Verbinden zweier Schlauch- oder Rohrleitungsenden, das im wesentlichen aus mit den Leitungsenden verbundenen und ineinandersteckbaren und mit einem Dichtring versehenen Anschlußnippeln sowie einem die Anschlußnippel vollständig übergreifenden, zwei Halbschalen aufweisenden hülsenartigen Element besteht, wobei die ineinandersteckbaren Anschlußnippel ringartige Schultern bilden, die mit den Flanschen des hülsenartigen Elementes mindestens teilweise korrespondieren, wobei die Schultern und die mit den Schultern korrespondierenden Flanschen des hülsenartigen Elementes beidseitig nach innen gerichtete Abschrägungen aufweisen,.

Es ist allgemein bekannt, Schlauchenden, bzw. die mit den Schlauchenden verbundenen Nippel oder Tüllen mittels einer Überwurfmutter zu verbinden. Insbesondere Schläuche mit größeren Nennweiten oder für höhere Drücke werden auf diese Weise oder auch über Ringflanschen und entsprechende Schraubverbindungen miteinander verbunden. Vornehmlich im Bergbau werden Schlauchabschnitte mit kleinerem Querschnitt über Steckverbindungen und einsteckbare Klammern miteinander lösbar verbunden.

Alle diese Schlauch-, Rohr- oder Leitungsverbindungen weisen erhebliche Nachteile auf. Vor allem bei ständig bewegten, beispielsweise als Versorgungsleitungen an Maschinen mitzuführenden Schläuchen, besteht ein wesentlicher Nachteil darin, daß die Schlauchverbindungen erheblich über den Schlauchquerschnitt überstehen und somit häufig ein Hängenbleiben der Schläuche und, damit verbunden, ein Verschleiß und die Zerstörung der Verbindungselemente sowie der Schläuche verursacht wird.

Abgesehen davon, wird durch das Hängenbleiben und schlagartige Lösen der Schläuche aus Hindernissen eine nicht unbeträchtliche Gefahr für Verletzungen hervorgerufen. Des weiteren wird für das Mitziehen derartig untereinander verbundener Schlauchabschnitte ein unnötig hoher Kraftaufwand durch die Maschinen erforderlich.

Ein weiterer wesentlicher Nachteil der bekannten Schlauch- und auch Rohrleitungsverbindungen besteht darin, daß insbesondere die Schlauchabschnitte nicht untereinander oder gegeneinander verdrehbar verbunden sind. Dadurch wird beispielsweise das im Schlauchmaterial eingebundene Drahtgeflecht derartig beansprucht, daß ein schnellerer Verschleiß und die Zerstörung des Schlauches die Folge ist.

Steckverbindungen unter Zuhilfenahme von einsteckbaren Klammern weisen insbesondere im Hinblick auf die geringen Kraftübertragungen besondere Probleme auf.

Weiterhin ist es ganz allgemein als Nachteil anzusehen, daß die herkömmlichen Schlauch- oder Leitungsverbindungen auch unter Druck gelöst werden können, was insbesondere bei Hochdruckschläuchen sehr häufig zu Verletzungen führt.

Nach der GB-PS2066 916 ist ein Rohrleitungs- und Schlauchverbindungselement bekannt, bei dem die ineinandersteckbaren und mit einem Dichtring versehenen Anschlußnippel an den Enden radial verlaufende Widerlager bilden und das aus zwei Teilen bestehende, die ineinandersteckbaren Anschlußnippel übergreifende Verbindungselement mit den Widerlagern korrespondierende Flansche aufweist. Die beiden, das Verbindungselement bildenden Teile werden von einem offen, an den Enden mit Umbördelungen versehenen Federstahlelement umfaßt. Zur Sicherung der Verbindung können die die ineinandersteckbaren Anschlußnippel teilweise umgreifenden zweigeteilten, einen Längsspalt aufweisenden Teile durch ein versiegelbares Band, das durch die Umbördelungen gezogen wird, oder durch eine das Verbindungselement umgreifende Spiralfeder zusammengehalten werden.

Der Nachteil derartiger Verbindungselemente liegt, abgesehen von einer etwas umständlichen Konstruktion, darin, daß sie aufgrund ihrer Ausbildung nicht eindeutig sicherbar und insbesondere bei hoher Druckbeaufschlagung nicht selbstsichernd, d.h. nicht lösbar ausgebildet ist.

In der US-PS 3 930 674 und vergleichbar in der europäischen Patentanmeldung 0 385 052 sind unter anderem Rohrverbindungen dargestellt, bei welchen die ineinandersteckbaren Anschlußnippel ein übergreifendes, zweigeteiltes hülsenartiges Element aufweisen. Die Schultern der Anschlußnippel und die der hülsenartigen Elemente sind jeweils mit nach innen gerichteten Abschrägungen versehen. Zur Sicherung des hülsenartigen Elementes sind in besondere Aufnehmungen einsetzbare und über den Querschnitt des ringartigen Elementes überstehende Federelemente vorgesehen. Besondere Probleme entstehen durch die überstehenden Teile, die zum einen Verletzungsgefahren und zum anderen Störanfälligkeiten und Unischerheiten beim Übertragen großer Kräfte hervorrufen und keine vollständige Sicherung der Rohrverbindung gewährleisten.

Weiterhin ist nach der GB-PS 675 943 eine Rohrverbindung bekannt, die im wesentlichen aus auf die Rohrenden aufsetzbaren und ineinandersteckbaren Hülsen besteht.Die Abdichtung und der angepaßte Sitz der Rohrverbindung wird durch zusätzliche und innerhalb der Hülsen angeordnete Elemente, u.a. ein ringartiges elastisches Dichtelement, erzielt.

Eine solche Rohrverbindung ist in keiner Weise geeignet, größere Zugkräfte zu übertragen, geht erheblich über den Rohrquerschnitt hinaus und bietet keinerlei Möglichkeit für eine erforderliche Sicherheit und ist ebenfalls nicht selbstsichernd ausgebildet.

Demgegenüber liegt der Erfindung die Aufgabe zugrunde, ein Verbindungselement zum Verbinden von Schlauch- oder Rohrleitungsabschnitten zu schaffen, das schnell und einfach zu montieren ist, das große Zugkräfte übertragen kann, das einen den Schlauchquerschnitt nicht überragenden Querschnitt aufweist, das gut sicherbar und andererseits bei Druckbeaufschlagung der Schlauchleitung selbstsichernd, d.h. nicht lösbar ausgebildet ist.

Diese Aufgabe wird erfindungsgemäß dadurch gelöst, dass ein Anschlußnippel mit einem Gewinde zur Aufnahme einer gegen das hülsenartige Element verschraubbaren Sicherungsmutter versehen ist.

Konstruktionsbedingt ist es möglich, das hülsenartige Element zweischalig auszubilden und es nur durch das Anziehen der Sicherungsmutter fest in die gesamte Verbindung zu integrieren. Durch die miteinander korrespondierenden Abschrägungen des durch den überstehenden Ring als auch durch die Überlappung gebildeten Flansches und der Abschrägungen innerhalb des aus zwei Schalen gebildeten hülsenartigen Elementes, als auch durch das Zusammenwirken der äußeren Abschrägung auf dem hülsenartigen Element mit der übergreifenden Überlappung der gegen das hülsenartige Element schraubbaren Sicherungsmutter, ist dies ohne zusätzliches federndes, die Schalen verbindendes Element möglich.

Da die Halbschalen in zusammengesetztem Zustand eine vollständig geschlossene Hülsen bilden, ist auch über den gesamten Umfang eine bessere Kraftübertragung gewährleistet.

Vorteilhafterweise sind jedoch auch zur Erleichterung der Montage die das hülsenartige Element bildenden Halbschalen durch ein federndes Element verbunden und bilden somit ein Klemmelement. Das federnde Element erlaubt es bei der Handhabung des hülsenartigen Elementes, die beiden Halbschalen soweit auseinanderzuklappen, daß sie auf den ringförmigen Flansch leicht aufsetzbar sind und gleichzeitig durch das federnde Element nach dem Aufsetzen einen gemeinsamen Ring bilden.

Die umlaufenden Abschrägungen korrespondieren, insbesondere bei Druckbeaufschlagung des Schlauches oder bei Zugbewegungen und ermöglichen große Kraftübertragungen. Andererseits ist das hülsenartige Element durch dieses, durch die Abschrägung bewirkte Verhalten, selbstsichernd ausgebildet, wobei die teilweise übergreifende Sicherungsmutter eine dem Lösen der Verbindung entgegenwirkende Sicherheit bewirkt.

Ein Ausführungsbeispiel der Erfindung ist in einer Zeichnung teilweise in einer Ansicht und teilweise geschnitten wiedergegeben, und wird im Nachfolgenden näher erläutert.

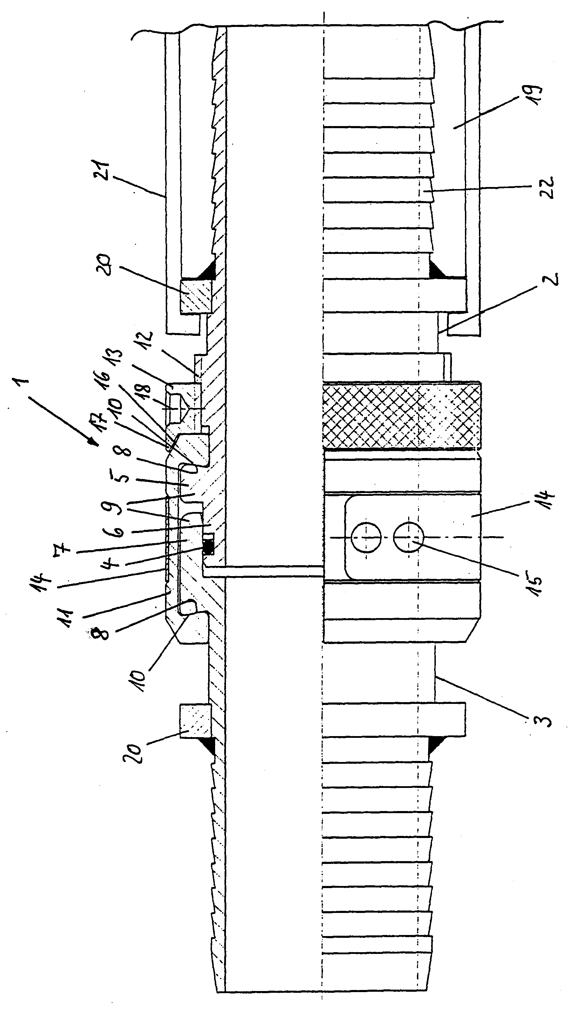

Das als Ausführungsbeispiel in der Zeichnung dargestellte Verbindungselement 1 verbindet zwei Anschlußnippel 2, 3, die jeweils endseitig mit einem Haltering 20 und Rippen 22 versehen sind. Der in der rechten Bildhälfte angedeutete Anschlußnippel 2 ist in ein Schlauchende 19 eingeführt und mittels einer Preßhülse 21 mit dem Schlauch 19 fest verbunden.

In der linken Bildhälfte ist die Schlauchverbindung des Anschlußnippels 3 nicht näher dargestellt. Zum Herstellen einer Verbindung wird der Anschlußnippel 2 in den Anschlußnippel 3 eingesteckt. In dem Einsteckende 6 ist eine umlaufende Ausnehmung für einen Dichtring 4 vorgesehen. Der Anschlußnippel 2 weist einen die Einstecklänge begrenzenden umlaufenden, eine Schulter bildenden Ring 5 auf. Der Anschlußnippel 3 ist mit einer Überlappung 7 versehen, die ebenfalls endseitig eine Schulter bildet. Der Ring 5 und die Überlappung 7 bilden im eingesteckten Zustand der Anschlußnippel 2 und 3 einen gemeinsamen Flansch 9, dessen Schultern an den Außenseiten Abschrägungen 8 aufweisen, die nach innen in Richtung der Steckverbindungen zeigen.

Auf den Flansch 9 werden die das hülsenartige Element 11 bildenden Halbschalen aufgesetzt und durch die Sicherungsmutter 13 an den Flansch 9 einseitig angepreßt. Zur Sicherung des hülsenartigen Elementes 11 weist die Sicherungsmutter 13 eine die Abschrägung 16 übergreifende Überlappung 17 auf.

Zur Vereinfachung der Montage sind die Halbschalen über ein federndes Element 14, beispielsweise über einen an den Enden mittels Nieten 15 befestigten Federstahl zu einem zweigeteilten Ring verbunden.

Zum Lösen der Sicherungsmutter 13, die auf einem Gewinde 12 verdrehbar angeordnet ist, sind, über den Umfang verteilt, Aufnahmeöffnungen 18 zum Einsetzen von Werkzeugen vorgesehen.

Bei Druckbeaufschlagung drücken sich die Anschlußnippel 2, 3 auseinander und der Ring 5 bzw. die Überlappung 7 pressen sich mit den Abchrägungen 8 gegen die Abschrägungen 10 des hülsenartigen Elementes 11 und verhindern auf diese Weise, auch nach Lösen der Sicherungsmutter 13, ein Öffnen der Verbindung der Schlauchabschnitte. Die Anschlußnippel 2, 3 sind derartig innerhalb des hülsenartigen Elementes 11 angeordnet, daß ein Drehen des Anschlußnippels 2 oder 3 durchführbar ist.

### Bezugszeichenliste

- 1: Verbindungselement
- 2: Anschlußnippel
- 3: Anschlußnippel
- 4: Dichtring
- 5: umlaufender Ring
- 6: Einsteckende
- 7: Überlappung
- 8: Abschrägung
- 9: Flansch
- 10: Abschrägung
- 11: hülsenartiges Element
- 12: Gewinde
- 13: Sicherungsmutter
- 14: federndes Element
- 15: Nieten
- 16: Abschrägung
- 17: Überlappung
- 18: Aufnahmeöffnung
- 19: Schlauch
- 20: Halterung
- 21: Preßhülse
- 22: Rippen

## Patentansprüche

1. Verbindungselement (1) zum Verbinden zweier Schlauch- oder Rohrleitungsenden, das im wesentlichen aus mit den Leitungsenden verbundenen und ineinandersteckbaren und mit einem Dichtring (4) versehenen Anschlußnippeln (2, 3) sowie einem die Anschlußnippel vollständig übergreifenden, zwei Halbschalen aufweisenden hülsenartigen Element (11) besteht, wobei die ineinandersteckbaren Anschlußnippel (2, 3) ringartige Schultern bilden, die mit den Flanschen des hülsenartigen Elementes (11) mindestens teilweise korrespondieren, wobei die Schultern und die mit den Schultern korrespondierenden Flanschen des hülsenartigen Elementes (11) beidseitig nach innen gerichtete Abschrägungen (8, 10) aufweisen, **dadurch gekennzeichnet,** dass ein Anschlußnippel (2, 3) mit einem Gewinde (12) zur Aufnahme einer gegen das hülsenartige Element (11) verschraubbaren Sicherungsmutter (13) versehen ist.

2. Verbindungselement nach Anspruch 1, **dadurch gekennzeichnet,** daß die zwei, das hülsenartige Element (11) bildenden Halbschalen über ein federndes Element (14), beispielsweise über einen an den Enden über Nieten (15) befestigten flachen Federstahl verbunden und als Klemmschalenelement ausgebildet sind.

3. Verbindungselement nach Anspruch 1, **dadurch gekennzeichnet,** daß das hülsenartige Element (11) mindestens an der zur Sicherungsmutter (13) gerichteten Seite eine Abschrägung (16) und die Sicherungsmutter (13) eine die Abschrägung (16) übergreifende Überlappung (17) aufweisen.

## Claims

1. A connecting member (1) for connecting two tube or pipe ends, substantially comprising connecting nipples (2, 3) connected to the pipe ends, fittable together and provided with a sealing ring (4), and a sleeve-type member (11) consisting of two half-shells and completely surrounding the connecting nipples, wherein the connecting nipples (2, 3), which are fittable together, form ring-type shoulders corresponding at least in part to the flanges of the sleeve-type member (11), wherein the shoulders and the flanges of the sleeve-type member (11) corresponding to the shoulders have inwardly extending chamfers (8, 10) on either side, characterised in that one connecting nipple (2, 3) is provided with a thread (12) for receiving a lock nut (13) screwable towards the sleeve-type member (11).

2. A connecting member according to claim 1, characterised in that the two half-shells forming the sleeve-type member (11) are connected by a resilient member (14), for example a flat spring steel fixed at the ends by rivets (15), and are formed as a clamping shell member.

3. A connecting member according to claim 1, characterised in that the sleeve-type member (11), at least on the side facing the lock nut (13), has a chamfer (16), and the lock nut (13) has an overlap (17) engaging over the chamfer (16).

## Revendications

1. Elément de connexion (1) pour la connexion de deux extrémités de tuyaux ou tuyaux flexiblex, ledit élément consistant essentiellement en des niples de raccordement (2,3) emboîtables, connectés aux extrémités des tuyaux et pourvus d'un joint annulaire (4), ainsi que d'un élément (11) en forme de douille composée de deux semi-coquilles et chevauchant entièrement les niples de raccordement, les niples de raccordement (2,3) emboîtables formant des épaules annulaires, qui correspondent au moins partiellement avec les flasques de l'élément (11) en forme de douille, les épaules et les flasques correspondant aux épaules de l'élément (11) en forme de douille étant pourvus de biseaux tournés vers l'intérieur, caractérisé en ce qu'un niple de raccordement (2,3) est pourvu d'un filetage (12) pour recevoir un écrou de blocage (13) pouvant être vissé contre l'élément (11) en forme de douille.

2. Elément de connexion selon la revendication 1, caractérisé en ce que les deux semi-coquilles formant l'élément (11) en forme de douille sont réunies par un élément élastique (14), par exemple par une pièce plate d'acier pour ressort fixée au moyen de rivets (15) à ses extrémités, et sont conçues comme élément de coquille de serrage.

3. Elément de connexion selon la revendication 1, caractérisé en ce que l'élément en forme de douille (11) est pourvu au moins du côté tourné vers l'écrou de blocage (13) d'un biseau et l'écrou de blocage (13) est pourvu d'un recouvrement (17) chevauchant sur le biseau (16).
